# EUROPEAN PATENT SPECIFICATION

(11) **EP 1 847 513 B1**
(45) Date of publication and mention of the grant of the patent: **28.03.2012**
(21) Application number: 07380109.4
(22) Date of filing: 18.04.2007
(51) Int. Cl.: C02F 1/467, C02F 1/66, C02F 103/42

(54) **Automatic device for water treatment by electrolysis, with pH and redox control**
Automatische Vorrichtung zur Wasserbehandlung durch Elektrolyse mit Kontrolle des pH- und Redoxwertes
Dispositif automatique de traitement de l'eau par électrolyse, avec contrôle du pH et redox

(30) Priority: 20.04.2006 ES 200600915
(43) Date of publication of application: 24.10.2007
(73) Proprietor: I.D. Electroquimica, S.L., 03114 Alicante (ES)
(72) Inventor: Sanchez Cano, Gaspar, 03114 Alicante (ES); Codina Ripoll, Guillermo, 03114 Alicante (ES); Perez Mallol, Jose Ramon, 03114 Alicante (ES)
(74) Representative: Temino Ceniceros, Ignacio

(56) References cited:
- WO-A-00/42339
- WO-A1-03/066999
- GB-A- 2 368 838
- US-A- 5 807 473
- US-A1- 2004 112 838

## Description

### FIELD OF THE INVENTION

The present invention is about a device for the water treatment and the control of its pH and ORP (redox), materialized in a compact element with reduced size and weight which integrates the electrolysis reactor with the pH and ORP (redox) controllers. In addition the device includes a remote communication system, wireless, in order to inform about the state of the treated water. The device, compact and low expense, makes possible the integral treatment of oxidation/disinfection of the water in a automatic way, regulated and accurate. The combination of the treatment by electrolysis and the regulation of the basic water parameters (pH and redox) produces a high water quality and an adjusted basis of residual oxidant that is obtained by an accurate treatment.

The invention is applicable to waters such as swimming pools, mini swimming pools, spas, and similars as well as water circuits such as cooling towers, fountains, drinking water storage, tank for fire extinguishing and recirculation circuits in general.

### BACKGROUND OF THE INVENTION

If the treatment is not effective the water can be subjected to high concentrations of contamination and high levels of oxidation which also are detrimental because of their aggressiveness to skin and eyes as well as the own installation.

An appropriate and accurate control of the oxidation and disinfection of the water needs an appropriate and accurate control of pH and ORP (redox) levels.

There are devices available in the market to treat and control the above parameters but as dispersed elements (see for example WO 00/42339, US 2004/0112838A1, WO 03/066999, GB 2368838A and US 5 807 473). This is due to technical incompatibilities that until now were impossible to integrate because of electronic and electrochemical interferences. These are caused by the existence of by-products generated during the electrolysis and they interfere in the controllers measure.

### SUMMARY OF THE INVENTION

The device for the water treatment that the invention proposes solves in a total satisfactory way the problematic exposed, integrating in just one instrument all the means for the control and treatment of the parameters that gives quality to the water.

To reach this, in a more particular method, this device is composed of a reactor block that collaborates with a central unit control, a pH electrode, an ORP electrode, an injection valve of pH controller, an electrochemical reactor with polarity reversal electrodes, a dosage pump and a wireless lighting receiver.

As well the central unit control is composed of an unique electronic card which contains a sophisticated alternating current rectifier, a pH controller, an ORP controller, a display, touch control and wireless emitter.

The central control unit is connected to its peripherals, such as sensors, electrochemical reactor, dosage plump, liquid level, pH controller by fast connectors that are carefully interlocked in the reactor body and communicates with the wireless receiver.

The wireless receiver floats in the water, it has very low energy consumption, it is fed by a battery and it is self-activated by movement. It reports to the users by chromatic signs on the state of the water. Different colours show an acceptable or unacceptable situation of the water.

The wireless receiver just match with the wireless emitter situated in the integrated card of the central unit. In this way several equipments can be fitted in the same area without any crossed interferences in the emitter-receiver communications.

The pH and ORP (redox) sensors are selected to do not have interferences caused by the electromagnetic field neither by the products generated during the process of the electrolysis, making possible then the integration of the electrochemical system with simultaneous control of pH and ORP.

With regard to the dosage pump, it can be integrated in the reactor section, being inserted easily in it by slight pressure. It also can be separated for convenience reasons when dosage. The injection valve is situated in the hydraulic circuit between the pH and ORP sensors and the electrolysis cell.

Finally, the electrochemical reactor is composed by a group of electrodes according to the monopolar or bipolar configuration. They are hold to the electrode holder cover with screws and O-ring.

### BRIEF DESCRIPTION OF THE DRAWINGS

In order to complement this description and to help to a better understanding of the invention characteristics, there are attached a set of drawing as a support for the description. The drawings show the following:

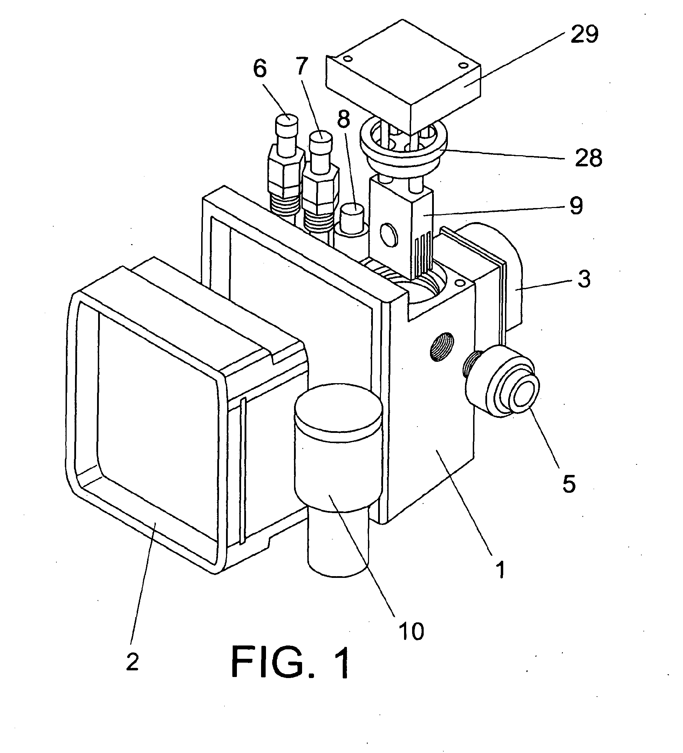

Figure1.- In a perspective view it illustrates an automatic device of water treatment by electrolysis with pH and redox control made according to the object of the invention.

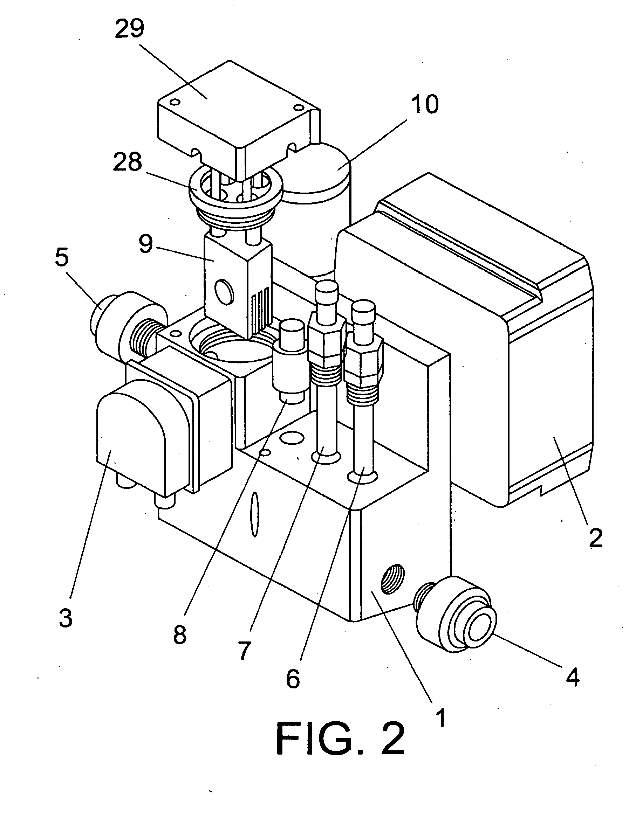

Figure 2.- Illustrates the same device but with another perspective, opposed to the previous one.
Figure 3.- To end up, this figure shows a detail of the controls at the control unit, in frontal view.

### DETAILED DESCRIPTION OF THE INVENTION

As it is shown in the reviewed figures, the device that the invention proposes is composed starting from a reactor body (1) made by injection or machining, and preferably using thermoplastic material which is highly resistant to the corrosion. It also contains the hydraulic part of the circuit and it is used as a support for the central control unit (2) as well as for the dosage pump (3) of the pH control solution. Both are located in the respective cavities fitted to pressure. The reactor body (1) is provided by an inlet (4) and an outlet (5) for the water to be treated.

The water could reach first the pH (6) sensor and then the ORP (7) one, or the opposite way. Next it will meet the injection valve (8) of the pH control solution which is injected by the mentioned dosage pump (3) that is controlled by the central control unit (2).

Finally the water goes into the electrolysis cell where the electrochemical reactor is located (9).This reactor (9) is fed from the central control unit (2) by a continuous current (dc) in a controlled way and has a polarity reversal for the electrode self-cleaning. The dc current power supply is regulated (activated-deactivated) according to the ORP sensor measure (7).

Finally the water submitted to an appropriate treatment by oxidation and disinfection goes out of the device with the suitable levels of chlorine and pH.

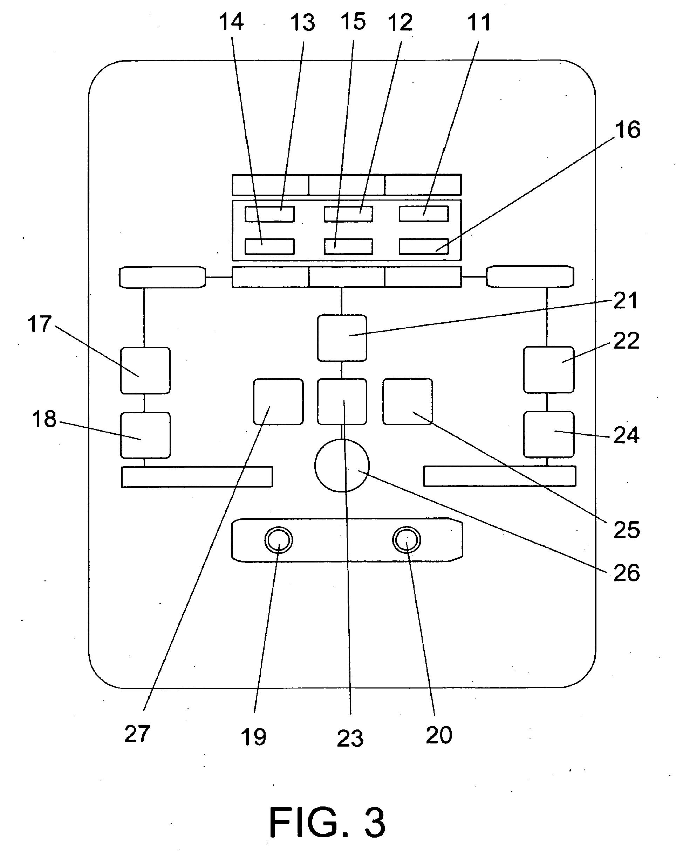

Back to the control unit again (2), it consists of a closed module which has an unique integral electronic card that controls completely the device, This electronic card has the following functions/controls:
- System information and configuration. An intuitive layout is used to have an easy handling of the device. The central unit has in its front panel all the configuration and information controls about the water treatment system state as illustrated in figure 3. This will be described later on.
- Current rectifier system (ac to dc), feeds the electrochemical reactor electrodes (9) with programmed polarity reversal. The electrochemical reactions produced by the anode and the cathode carry out the oxidation and disinfection process by halogen formation starting from the halides present in the water, as well as the additional anodic oxidation of the organic matter (active oxygen) and the destruction of the colloids, nitrates, nitrites and chloramines. The controlled and synergic treatment produces a high quality water with controlled pH and ORP parameters.
- pH meter-controller, as well as dosage pump control (3). It also allows the input of a signal corresponding to the level of pH control solution in its container (minimum level alarm).
- ORP meter-controller, as well as the control of the electrolysis process according to the ORP levels, even adding a dosage pump control to modify this value.
- Wireless communication to inform about the water situation by an external receiver.(10)
- The central unit (2) is designed with fast connections to the peripheral elements of the integrated module such as pH sensor, ORP sensor, dosage pump, dosage solution level, electrodes, and electrical supply.

Everyone of this elements assembled together in the same electronic card implies a triple advantage because it includes the following features:
- It minimizes the equipment volume that makes possible a reduced size an weight.
- It makes very easy the installation works of the disinfection equipment.
- It minimizes the production cost of the integral treatment equipment.
- The equipment design makes possible a fast replacement of the central unit (2) which includes all the operation and control functions.
- The system design gives the option to cancel the integrated electrolysis unit and allows to work by classic treatment with dosage of oxidante and pH control solutions. Because of this characteristic, this system may be considered as a DUAL equipment:
   Option 1.- Electrolysis treatment with pH and ORP control (electrochemical oxidation and disinfection with dosage of a pH control solution).
   Option 2.- Classic treatment for pH and ORP settlement (pH control and oxidation liquid dosage)

As previously mentioned, Figure 3 shows the front panel of the central control unit (2), in which references (11), (12), and (13) show respectively the ORP value display, the oxidant production indicator and the pH value display. The references (14), (15), (16) show respectively the pH set point, general information about the AUTO and MANUAL mode and the ORP set point display.

The reference (17) is the pH set point key. The reference (18) is the pH calibration key, the reference (19) is the indication led of active unit, the reference (20) is the led of the system alarm, the reference (21) is the auto mode key to control automatically the electrolysis production according to the ORP set point value. The reference (22) is the ORP set point selection key, (23) auto mode key to produce by electrolysis, (24) ORP sensor calibration key, (25) is the "down" key that decreases the electrolysis production in manual mode, (26) is the "stop" key that turns-off the electrolysis production in manual mode as well as in automatic mode and (27) is up key that increases the electrolysis production in manual mode.

The pH (6) and ORP (7) sensors are introduced in the reactor body through the PE electrode holder. This make possible an easy removal to carry out inspection and maintenance works and also sensor calibration. The sensors are connected to the central unit control (2) by fast connectors.

The sensors must be immune to the electrolysis by-products to avoid the interferences in the measures and also must be protected from the electric field generated by the electrochemical reactor operation (9). Regarding the injection valve of the pH control solution, it is situated between the sensors (6 & 7) and the electrolysis reactor (9). It is a anti-return valve that adjusts the pH and improves electrode self- cleaning.

The electrochemical reactor (9) can have a monopolar or a bipolar configuration of its electrodes. The electrodes allow the polarity reversal and are connected with titanium squared head screws. The watertight closing is made by an o-ring.

Apart from the cathodes and anodes, the electrode cover (28) has two titanium screws which have the task to detect if there is water flow in the unit, acting as flow sensor by gas bubble formation when there is not water flow and the electrolysis system is running. If this may occurs the central unit (2) stops the electrolysis.

The electrode holder (28) shows four contacts, a cathode, an anode, and two additional ones for flow detection. Those are connected to the central unit by a fast connection. Although the electrical contacts are at low voltage they are protected by a cover (29) which is screwed or fitted by slight pressure to the block reactor body.

The dosage pump (3) is in charge to inject the pH control solution through the injection valve (8) and it is controlled from the central unit (2). It is connected by a fast connector.

The dosage pump could be joint to the reactor body (1) by a cavity where it is inserted by slight pressure or screwed. It also can be separated of the compact unit for convenience reasons. It is the only optional element and it can be fixed to any kind of commercial pump. In any case it would be controlled from the control unit.(2)

Finally the wireless informative receiver (10) is a watertight element (o-ring closing) that floats in the water. It has a built-in wireless reception unit that is paired with the wireless emitter integrated in the electronic card of the control unit (2).

This module is supplied by a long-life battery and low voltage . The unit is self-activated by movement (manual shaking or swelling), emitting a green light whether the treatment parameters are right. (pH and ORP values in range, as well as the other parameters such as conductivity, water, flow, etc.) and if they are not right it emits a red light. This is specially useful for playful waters because it makes possible to the bathers to know the water state in an easy and intuitive way, even to the children.

On the other hand it also avoids the necessity to inspect the installation place of the treatment unit, that can be located away from where the water is.

## Claims

1. Automatic device for water treatment by electrolysis with pH and ORP (redox) control for both playful waters and circuits in general comprising a reactor block that collaborates with a central unit control, a pH electrode, an ORP electrode, an injection valve of pH controller, an electromechanical reactor with polarity reversal electrodes, a dosage pump and a wireless lighting receiver; wherein the central unit control is composed of a unique electronic card which contains a sophisticated current rectifier, a pH controller, an ORP controller, a display, touch control and a wireless emitter; wherein said dosage pump can be integrated in the reactor section, being inserted easily in it by slight pressure; and wherein an injection valve is situated in the hydraulic circuit between the pH and the ORP sensors and the electrolysis cell, where the electrochemical reactor is located, that is composed by a group of electrodes according to the monopolar or bipolar configuration;
**characterized in that**
said central control unit is connected to its peripherals, such as sensors electromechanical reactor, dosage pump, liquid level, pH controller by fast connectors that are carefully interlocked in the reactor body and communicates with a wireless receiver; wherein said wireless receiver (10) is a watertight element with an o-ring closing that floats in the water, it has a built-in wireless reception unit that is paired with the wireless emitter integrated in the electronic card of the control unit (2), it has a very low energy consumption, it is fed by a battery and it is self activated by movement and reports to the users by chromatic signs on the state of the water.

2. Device according to claim 1, wherein the pH and redox sensors have a physical design in such a way they are not affected by the electric field and products produced during the electrolysis.

3. Device according to any of claims 1 to 2, wherein the dosage pump may be integrated in the reactor body, fitted by slight pressure or alternatively physically independent from the reactor body and located away from it.

4. Device according to any of claims 1 to 3, wherein the electrolysis reactor comprises a group of polarity reversal electrodes according to a monopolar or bipolar configuration and they are hold by an electrode holder cover with titanium screws and O-ring.

5. Device according to claim 4, wherein the titanium screws of the electrode holder cover have the task to detect if there is water flow in the unit, acting as flow sensor by gas bubble formation when there is not water flow and the electrolysis system is running.

## Patentansprüche

1. Automatische Vorrichtung zur Behandlung von Wasser durch Elektrolyse mit Kontrolle des pH-Werts und ORP (Redox), sowohl von Wasser in Freizeitanlagen als auch von allgemeinen Kreisläufen, wobei diese einen Reaktorblock umfasst, der mit einer zentralen Steuereinheit zusammenwirkt, einer pH-Elektrode, einer ORP-Elektrode, einem Einspritzventil für das pH-Kontrollgerät, einem elektromechanischen Reaktor mit Umpolung, einer Dosierpumpe und einem drahtlosen Lichtempfänger, wobei die zentrale Steuereinheit aus einer einzigen elektronischen Karte besteht, die einen hoch entwickelten Gleichrichter enthält, ein pH-Kontrollgerät, einen ORP-Regler, einen Bildschirm, Taster und einen drahtlosen Sender, wobei die genannte Dosierpumpe in dem Reaktorabschnitt integriert sein kann und in diesen einfach durch einen leichten Druck eingeführt werden kann und wobei das Einspritzventil im Hydraulikkreis zwischen den pH-Sensoren und den ORP-Sensoren und der Elekrolysezelle, in der sich der elektrochemische Reaktor befindet, angeordnet ist, wobei letzerer aus einer Elektrodengruppe in einer monopolaren oder bipolaren Ausführung besteht,
**dadurch gekennzeichnet, dass**
die genannte zentrale Steuereinheit mit den Peripheriegeräten, wie den Sensoren, dem elektromechanischen Reaktor, Dosierpumpe, Flüssigkeitsstand, pH-Kontrollgerät über Schnellsteckverbinder verbunden ist, die sorgfältig im Reaktorkörper verriegelt werden und mit einem drahtlosen Empfänger kommuniziert, wobei der genannte drahtlose Empfänger (10) ein dichtes Element ist, mit einem Verschluss mit einer O-Ring-Dichtung, die im Wasser schwimmt, und eine drahtlose Empfängereinheit aufweist, die zu dem drahtlosen Sender passt, der in der elektronischen Karte des Steuermoduls (2) integriert ist, einen geringen Stromverbrauch hat, mit einer Batterie gespeist wird und durch Bewegung aktiviert wird, und die Benutzer über Farbsignale über den Wasserzustand informiert.

2. Vorrichtung nach Anspruch 1, in der die pH- und Redox-Sensoren physisch derart ausgelegt sind, dass sie nicht von einem elektrischen Feld noch durch bei der Elektrolyse entstandene Produkte beeinflusst werden.

3. Vorrichtung nach einem der Ansprüche 1 bis 2, in der die Dosierpumpe in den Reaktorkörper integriert sein kann und durch einen leichten Druck in diesem aufgenommen wird oder physisch unabhängig vom Reaktorkörper ausgebildet sein kann und sich an einem von diesem entfernten Ort befindet.

4. Vorrichtung nach einem der Ansprüche 1 bis 3, in der der Elektrolysereaktor eine Elektrodengruppe umfasst, mit Umpolung in einer monopolaren oder bipolaren Ausführung, wobei diese mit Titanschrauben und einer O-Ring-Dichtung an einem Deckel eines Elektrodenhalters befestigt sind.

5. Vorrichtung nach Anspruch 4, in der die Titanschrauben des Deckels des Elektrodenhalters die Aufgabe haben, festzustellen ob in der Einheit Wasser fließt, wobei diese als Durchflusssensoren fungieren durch die Bildung von Gasblasen, wenn kein Wasser fließt und das Elektrolysesystem in Betrieb ist.

## Revendications

1. Dispositif automatique de traitement de l'eau par électrolyse, contrôlant le pH et l'ORP (redox), aussi bien dans des eaux ludiques que dans des circuits en général, comprenant un bloc réacteur lié à une unité centrale de contrôle, une électrode de pH, une électrode d'ORP, une soupape d'injection du contrôleur de pH, un réacteur électromagnétique à électrodes d'inversion de polarité, une pompe doseuse et un récepteur lumineux; l'unité centrale de contrôle est composée d'une seule carte électronique qui contient un redresseur de courant sophistiqué, un contrôleur de pH, un régulateur d'ORP, un écran, des boutons-poussoirs et un émetteur sans fils; cette pompe doseuse peut être intégrée dans la section du réacteur et s'y insérer facilement au moyen d'une légère pression; la soupape d'injection se situe dans le circuit hydraulique entre les détecteurs de pH et de ORP et la cellule d'électrolyse; et dans lequel se trouve un réacteur électrochimique composé d'un groupe d'électrodes d'après une configuration monopolaire ou bipolaire;
**caractérisé en ce que**
cette unité centrale de contrôle est raccordée à ses périphériques (détecteurs, réacteur électromécanique, pompe doseuse, niveau de liquide et contrôleur de pH), par le biais de connecteurs rapides qui s'entre-verrouillent soigneusement dans le corps réacteur et elle communique sans fils avec le récepteur; le récepteur sans fils (10) est un élément étanche avec une fermeture à joint torique qui flotte dans l'eau, qui possède une unité de réception sans fils connectée à un émetteur sans fils intégré dans la carte électronique du module de contrôle (2), à basse consommation électrique, alimenté avec une batterie, qui s'active avec le mouvement et qui informe les utilisateurs sur l'état de l'eau au moyen de signaux chromatiques.

2. Dispositif selon la revendication 1, dans lequel les détecteurs de pH et de redox possèdent une forme les protégeant du champ électrique et des produits qui se forment pendant l'électrolyse.

3. Dispositif selon l'une quelconque des revendications 1 à 2 dans lequel la pompe peut être intégrée dans le corps réacteur, logée au moyen d'une légère pression ou être physiquement indépendante du corps réacteur et située dans un endroit éloigné de celui-ci.

4. Dispositif selon l'une quelconque des revendications 1 à 3 dans lequel le réacteur d'électrolyse comprend un groupe d'électrodes à inversion de polarité, selon une configuration monopolaire ou bipolaire, fixées à un couvercle porteur d'électrodes au moyen de vis en titane ou d'un joint torique,

5. Dispositif selon la revendication 4, dans lequel les vis en titane du couvercle porteur d'électrodes servent à détecter l'existence du flux d'eau dans l'unité et agissent comme un détecteur de flux au moyen de la formation de bulles de gaz lorsqu'il n'y a pas de flux d'eau et lorsque le système d'électrolyse est en marche.
